# EUROPÄISCHE PATENTSCHRIFT

(11) **EP 1 040 041 B1**
(45) Veröffentlichungstag und Bekanntmachung des Hinweises auf die Patenterteilung: **24.07.2002**
(21) Anmeldenummer: 98966366.1
(22) Anmeldetag: 17.12.1998
(51) Int. Cl.: B62D 33/06

(54) **FAHRZEUG MIT EINEM RAHMEN**
VEHICLE WITH A FRAME
VEHICULE COMPORTANT UN BATI

(30) Priorität: 19.12.1997 DE 19756909
(43) Veröffentlichungstag der Anmeldung: 04.10.2000
(73) Patentinhaber: Bayerische Motoren Werke Aktiengesellschaft, 80788 München (DE)
(72) Erfinder: BRUNNER, Peter, D-85229 Langenpettenbach (DE); HELM, Detlef, D-86576 Hilgertshausen/Tandern (DE); GEIB, Willi, D-85716 Unterschlei heim (DE); HAIDER, Michael, D-85402 Kranzberg (DE)
(86) Internationale Anmeldenummer: EP9808312
(87) Internationale Veröffentlichungsnummer: WO9932347

(56) Entgegenhaltungen:
- EP-A- 0 574 281
- DE-C- 755 321
- US-A- 3 276 812
- US-A- 3 554 596
- US-A- 3 966 009
- US-A- 4 271 920
- US-A- 4 438 825

## Beschreibung

Die Erfindung bezieht sich auf ein Fahrzeug mit einem Rahmen nach dem Oberbegriff des Anspruchs 1.

Gattungsgemäße Fahrzeuge wurden ab dem Jahr 1974 von der Firma Citroen unter der Modellbezeichnung CX2000 und CX2200 hergestellt. Der Rahmen dieser Fahrzeuge ist als Fahrgestell ausgebildet und nimmt das Antriebsaggregat sowie die Vorder- und Hinterachse auf. Der Aufbau ist über 16 Koppelelemente an das Fahrgestell angebunden.

Durch die elastische Verbindung des Fahrgestells, das die schwingungserzeugenden Komponenten (Antriebsaggregat, Achsen) aufnimmt, mit dem Fahrzeugaufbau wird bei dem bekannten Fahrzeug ein relativ niedriger Innengeräuschpegel erreicht. Aufgrund der großen Anzahl von Koppelelementen ist jedoch die Einleitung eines nicht unbeträchtlichen Anteils von Schwingungen in den Fahrzeugaufbau unvermeidlich. Außerdem wirkt die Brennkraftmaschine am vorderen Endabschnitt des Fahrgestells als Schwingungserreger, über den Schwingungen in das Fahrgestell und damit den Fahrzeugaufbau übertragen werden.

Aus der US 3,276,812 ist ferner ein Fahrzeug mit einem Rahmen bekannt, bei dem die Kabine des Fahrzeuges über erste und zweite Koppelelemente mit dem Rahmen verbunden ist. Die ersten Koppelelemente sind im Bereich eines Schwingungsknotens des Rahmens angeordnet, während die zweiten Koppelelemente eine Federrate haben, die nicht linear über dem Federweg ansteigt, um hierdurch die Kabine gegenüber den Schwingungen des Rahmens zu isolieren. Die ersten und zweiten Koppelelemente sind in Fahrzeuglängsrichtung zueinander beabstandet.

Ferner ist aus der US 4,438,825 ein Fahrzeug mit einem Rahmen und einer Kabine bekannt, wobei die Kabine an solchen, in Fahrzeuglängsrichtung zueinander beabstandeten Punkten angeordnet ist, die eine im wesentlichen gleich große vertikale Auslenkung erfahren. Hierdurch werden Nickschwingungen der Kabine vermieden. Die Kabine führt jedoch Vertikalschwingungen aus.

Aufgabe der Erfindung ist es, die Nachteile des bekannten Stand der Technik zu vermeiden.

Diese Aufgabe wird durch die Merkmale der Ansprüche 1 und 12 jeweils für sich oder in Kombination gelöst.

Kerngedanke der Erfindung gemäß Anspruch 1 ist es, den Rahmen nur in den Bereichen an den Fahrzeugaufbau anzubinden, in denen Schwingungsknoten der Biegeeigenformen des Rahmens vorliegen. Dabei wird angestrebt, die Koppelelemente zumindest in den Bereichen der Schwingungsknoten der ersten und zweiten Biegeeigenformen zu plazieren. Durch dieses Konstruktionsprinzip wird verhindert, daß bei Biegeschwingungen des Rahmens durch die Koppelelemente Schwingungsenergie in den Fahrzeugaufbau übertragen wird. Derartige Biegeschwingungen entstehen einerseits durch das Antriebsaggregat sowie durch am Rahmen angeordnete Nebenaggregate (Klimakompressor, Standheizung, etc.) und andererseits durch fahrbahnseitige Krafteinleitung. Im Gegensatz zum bekannten Stand der Technik sind die Koppelelemente damit nicht "willkürlich" (gemäß den konstruktiv bestmöglichen Anbindungsorten) entlang des Rahmens verteilt, sondern aufgrund schwingungstechnischer Berechnungen und Untersuchungen gezielt angeordnet. Damit befindet sich der Fahrzeugaufbau für die betrachteten Biegeeigenformen außerhalb des Kraftflusses der Gesamtstruktur, so daß die Körperschallübertragung maßgeblich reduziert wird.

Eine Anordnung der Koppelelemente exakt in Schwingungsknoten des Rahmens ist in der Praxis nicht realisierbar. Die Plazierung der Koppelelemente im Bereich der Schwingungsknoten ist jedoch ausreichend, da hier nur sehr geringe Schwingamplituden vorliegen. Untersuchungen der Anmelderin an mehreren Fahrzeugkonzepten haben darüber hinaus ergeben, daß sowohl die Biegeschwingungen erster Ordnung als auch höherer Ordnungen in einem engen Bereich Schwingungsknoten aufweisen, so daß auch in bezug auf höhere Biegeeigenformen des Rahmens eine weitreichende Schwingungsisolierung möglich ist.

Durch die Aufteilung "Rahmen - separater Fahrzeugaufbau" ergibt sich darüber hinaus ein günstiger Fertigungsprozeß, der in einfacher Weise die Ableitung von Fahrzeugvarianten ermöglicht.

Gemäß Anspruch 2 können alternativ oder zusätzlich Torsionseigenformen des Rahmens minimiert werden, indem die Koppelelemente im Bereich von Schwingungsknoten der Torsionseigenformen angeordnet werden.

Die Koppelelemente werden z. B. von konventionellen Gummi-Metall-Lagern gebildet. Ebenso kommen Hydrolager mit optimiertem Federungs- und Dämpfungsverhalten in Betracht. Regelbare Hydrolager sind beispielsweise für den Fall einer gezielten aktiven Regelung der Koppelelemente vorzusehen (Anspruch 3). Damit kann je nach der momentan dominierenden Schwingform (Biegung oder Torsion) die eine oder die andere Gruppe von Koppelelementen bzw. können einzelne Koppelelemente (de)aktiviert werden. Dies hat seinen Grund darin, daß sich die Schwingungsknoten der Torsionseigenformen des Rahmens zumindest teilweise im Bereich von Schwingungsbäuchen der Biegeeigenformen befinden und somit eine gleichzeitige Minimierung der beiden Schwingformen nicht möglich ist.

Daneben können gemäß Anspruch 7 die Koppelelemente je nach Fahrzeugzustand und Beladung bzw. aktuellem Schwingungszustand gezielt angesteuert oder geregelt werden. Dazu wird die Federrate und/oder Dämpfung beispielsweise von regelbaren Hydrolagern je nach Fahrzeuggewicht, Fahrbahnanregung, Fahrzeuggeschwindigkeit, Quer- und Längsbeschleunigung, etc. verändert, um einerseits den Fahrkomfort zu optimieren und andererseits die Schwingungsübertragung zu minimieren.

Rahmen aus Leichtmetall gemäß Anspruch 8 können beispielsweise aus Strangprofilen oder aus tiefgezogenen Blechteilen hergestellt werden. Durch die Werkstoffwahl ergibt sich ein niedriges Eigengewicht des Rahmens bei gleichzeitig hoher statischer und dynamischer Steifigkeit und hohem Energieabsorptionsvermögen. Selbstverständlich können anstelle von Leichtmetallen auch andere Leichtbauwerkstoffe, wie z. B. Faserverbundwerkstoffe, eingesetzt werden.

Im Sinne einer konsequenten Funktionstrennung von Rahmen und Fahrzeugaufbau kann der Rahmen gemäß Anspruch 9 zusätzlich so ausgelegt werden, daß er im Falle eines Crashs durch gezielte Verformung kinetische Energie abbaut. Der Fahrzeugaufbau muß somit lediglich eine ausreichende Steifigkeit für den Fall eines Fahrzeugüberschlags und zur Abstützung der eigenen Trägkeitskräfte (Eigenmasse, Insassen, Zuladung) aufweisen. Ansonsten kann der Fahrzeugaufbau optimal hinsichtlich seiner eigentlichen Aufgabe, der Aufnahme von Insassen und Transportgut, ausgelegt werden.

Bei Ausbildung eines Fahrzeugaufbaus gemäß Anspruch 10 kann im Vergleich zu herkömmlichen selbsttragenden Fahrzeugaufbauten aus metallischen Werkstoffen eine deutliche Gewichtsreduzierung (in der Größenordnung von ca. 50%) erreicht werden. Bei Integration der Knautschzone des Fahrzeugs in den Rahmen, wie unter Anspruch 5 beschrieben, hat der Fahrzeugaufbau nur reduzierte Crashanforderungen zu erfüllen, so daß z. B. Faserverbundwerkstoffe mit optimiertem Laminataufbau und damit geringem Eigengewicht eingesetzt werden können.

Anspruch 11 beschreibt eine besonders verwindungs- und biegesteife Ausführung eines Rahmens.

Anspruch 12 schlägt erfindungsgemäß vor, die Brennkraftmaschine "liegend" anzuordnen, so daß die freien Massenkräfte in Längsrichtung des Rahmens eingeleitet werden. Da der Rahmen in Längsrichtung im Vergleich zur Anregung in vertikaler Richtung eine hohe Impedanz (Faktor ca. 20 bis 30) aufweist, wird durch die erfindungsgemäße Anordnung der Brennkraftmaschine nur in geringem Maß Körperschall am Rahmen induziert.

Mit der Weiterbildung der Erfindung nach Anspruch 13 kann insbesondere der vordere Bereich des Rahmens optimal auf die Funktion "Energieabsorption" hin ausgelegt werden. Selbstverständlich kann das Antriebsaggregat auch im mittleren oder vorderen Bereich des Rahmens angeordnet werden.

Durch eine Drehmomentenabstützung der Brennkraftmaschine im Bereich der Schwingungsknoten (Anspruch 14) wird die Einleitung von Schwingungen in den Rahmen weiter minimiert.

Das Prinzip der Erfindung ist in der Zeichnung schematisch dargestellt und wird nachfolgend näher erläutert. Es zeigt:
- Figur 1: ein erfindungsgemäßes Fahrzeug in der Seitenansicht und
- Figur 2: eine Draufsicht des Gegenstands von Figur 1.

Bei einem erfindungsgemäßen Fahrzeug ist ein Fahrzeugaufbau 1 über Koppelelemente 2 bzw. 3 an einen Rahmen 4 angebunden. Der Aufbau 1 kann teilweise mittragend ausgebildet sein. Der Pfeil FR kennzeichnet die Fahrtrichtung. Im Heckbereich des Fahrzeuges ist ein Antriebsaggregat 5 mittels Lagerelementen 6 angeordnet. Eine Drehmomentstütze 7 wirkt einer Verdrehung des Antriebsaggregates 5 entgegen. Das Antriebsaggregat 5 ist mit einer motomahen Kapselung zur akustischen Isolation versehen. Eine gezielte Luftschalldämmung zwischen Fahrgastzelle und Motorraum mit nur wenigen Durchbrüchen reduziert die Luftschallübertragung weiter.

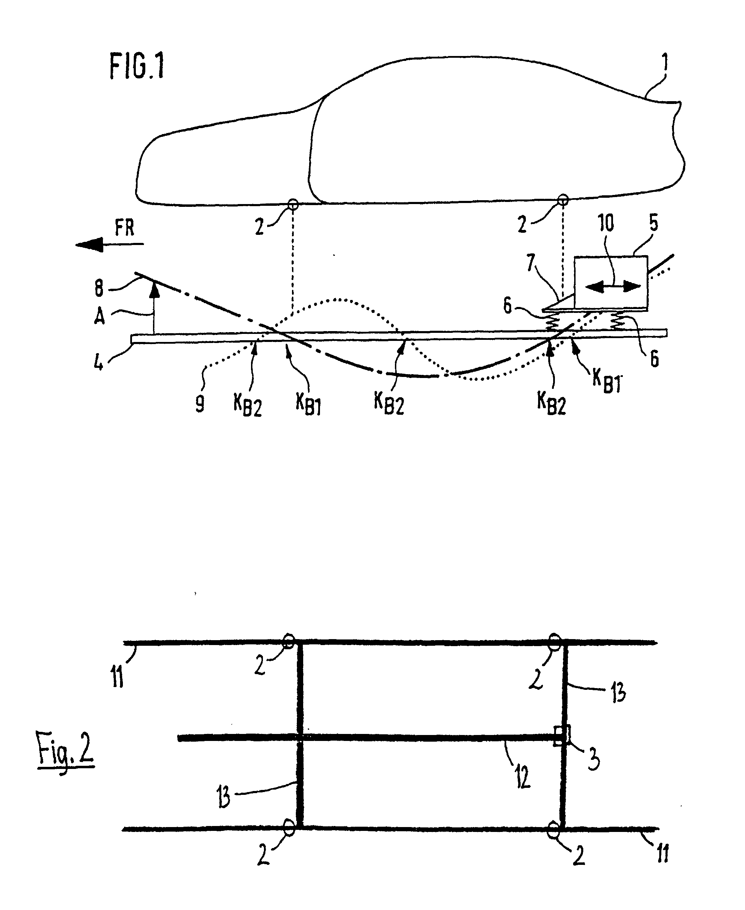

In Figur 1 sind die Biegeeigenformen erster und zweiter Ordnung des Rahmens 4 mit den Linien 8 und 9 vereinfacht dargestellt. Der Biegeverlauf gemäß der Linie 8 weist hierbei zwei Knoten K_{B1} auf, während außerhalb der Knotenbereiche K_{B1} entsprechend große Schwingamplituden A vorliegen. Die Knoten K_{B1} liegen etwa im Bereich der vorderen Stirnwand des Fahrzeuges bzw. der Gepäckraumtrennwand. Die Linie 9, die die Biegeeigenform zweiter Ordnung repräsentiert, weist drei Knoten K_{B2} auf, wobei die beiden äußeren Knoten K_{B2} nahezu lagegleich mit den Knoten K_{B1} der Biegeeigenform erster Ordnung sind.

Durch die erfindungsgemäße Anordnung der Koppelelemente 2 im Bereich der Knoten K_{Bn} (mit n = 1, 2, ...) wird prinzipbedingt nur eine sehr geringe Schwingenergie vom Rahmen 4 in den Fahrzeugaufbau 1 übertragen. Damit wird ein bestmöglicher Geräuschkomfort erreicht. Durch die erfindungsgemäße Bauweise kann die Eigenfrequenz des Fahrzeugs zudem in Richtung höherer und damit unkritischerer Frequenzen verschoben werden. So wurde beispielsweise bei einem erfindungsgemäßen Fahrzeug für den Rahmen 4 eine Eigenfrequenz von mehr als 40 Hz erreicht, während der Fahrzeugaufbau 1 eine Eigenfrequenz von ca. 30 Hz aufwies. Die Kombination aus Rahmen 4 und Fahrzeugaufbau 1 lag mit einer Eigenfrequenz von mehr als 32 Hz deutlich über der Eigenfrequenz von ca. 25 bis 30 Hz moderner Fahrzeugkarosserien in konventioneller selbsttragender Bauweise.

Das Antriebsaggregat 5 ist im vorliegenden Ausführungsbeispiel als Hubkolben-Brennkraftmaschine ausgeführt. Der Doppelpfeil 10 gibt die Richtung der freien Massenkräfte des liegend eingebauten Antriebsaggregates 5 an. Durch die Massenkräfte wird der in Längsrichtung steife Rahmen 4 nicht in nennenswertem Maße zu Biegeschwingungen angeregt.

Die Draufsicht gemäß Figur 2 zeigt die Anordnung der Koppelelemente 2 und 3 am Rahmen, der sich aus zwei seitlichen Längsträgern 11, einem Mittelträger 2 und zwei Querträgern 13 zusammensetzt. Der in der Fahrzeugmitte verlaufende, durchgehende Mittelträger 12 stützt das im Heck des Fahrzeugs angeordnete Antriebsaggregat 5 bei einem Frontalcrash wirkungsvoll in Fahrtrichtung FR ab.

Während die Koppelelemente 2 im Bereich der Schwingungsknoten K_{B1} und K_{B2} der Biegeeigenform angeordnet sind, ist ein zusätzliches Koppelelement 3 in der Längsmittelachse des Rahmens 4 in einem solchen Bereich vorgesehen, wo ein Schwingungsknoten K_{T1} der ersten Torsionseigenform (nicht dargestellt) des Rahmens 4 vorliegt.

Durch eine aktive Ansteuerung der Koppelelemente 2 und 3 wird bei Auftreten einer Torsionsbeanspruchung eine "Dreipunktabstützung" erreicht, indem das Koppelelement 3 aktiviert und die beiden hinteren Koppelelemente 2 deaktiviert werden. Das Koppelelement 3 ist in demjenigen Abschnitt des Rahmens 4 zu plazieren, in dem bei Torsionsbeanspruchung an den benachbarten Koppelelementen 2 die größten Amplituden auftreten.

Bei dominierender Biegebeanspruchung ist in umgekehrter Weise zu verfahren, indem die Koppelelemente 2 aktiviert werden, bei gleichzeitiger Deaktivierung des Koppelelementes 3, um die Übertragung von Biegeschwingungen in den Fahrzeugaufbau zu unterbinden. Im vorliegenden Ausführungsbeispiel erübrigt sich jedoch die Deaktivierung des Koppelelementes 3, da es sich im Bereich der Schwingungsknoten K_{B1} und K_{B2} der Biegeeigenformen befindet.

Die Koppelelemente 2 bzw. 3 können unter anderem beispielsweise als relativ einfach aufgebaute Gummi-Metall-Lager ausgeführt werden. Die Gummielemente der Koppelelemente 2 bzw. 3 bestehen z. B. aus einem Elastomerwerkstoff mit einer Federrate von ca. 10³ bis 10⁴ N/mm².

## Patentansprüche

1. Fahrzeug mit einem Rahmen, der das Antriebsaggregat und/oder das Fahrwerk des Fahrzeuges aufnimmt sowie mit einem Fahrzeugaufbau zur Aufnahme der Fahrzeuginsassen und von Transportgut, wobei Rahmen und Fahrzeugaufbau über Koppelelemente miteinander verbunden sind,
**dadurch gekennzeichnet, daß** die Koppelelemente (2) wenigstens im Bereich eines - bezogen auf die Fahrtrichtung (FR) des Fahrzeuges - vorderen und eines hinteren Schwingungsknotens (K_{Bn}) der Biegeeigenform(en) des Rahmens (4) angeordnet sind.

2. Fahrzeug nach Anspruch 1,
**dadurch gekennzeichnet, daß** wenigstens ein zusätzliches Koppelelement (3) im Bereich von Schwingungsknoten (K_{Tn}) der Torsionseigenform(en) des Rahmens (4) angeordnet ist.

3. Fahrzeug nach Anspruch 2,
**dadurch gekennzeichnet, dass** das zusätzliche Koppelelement (3) in demjenigen Abschnitt des Rahmens (4) angeordnet ist, in dem bei Torsionsbeanspruchung an den benachbarten Koppelelementen (2) im Bereich der Schwingungsknoten der Biegeeigenformen die größten Amplituden auftreten.

4. Fahrzeug nach Anspruch 2 und/oder 3,
**dadurch gekennzeichnet, dass** Mittel zur Steuerung oder Regelung der Koppelelemente (2, 3) vorgesehen sind, durch die je nach der momentan dominierenden Schwingform (Biegung oder Torsion) die eine oder die andere Gruppe von Koppelelementen (2, 3) bzw. einzelne Koppelelemente (2, 3) (de)aktiviert werden.

5. Fahrzeug nach Anspruch 4,
**dadurch gekennzeichnet, dass** bei Auftreten einer Torsionsbeanspruchung eine "Dreipunktabstützung" erreicht wird, indem das zusätzliche Koppelelement (3) aktiviert und die beiden benachbarten Koppelelemente (2) im Bereich der Schwingungsknoten der Biegeeigenformen deaktiviert werden.

6. Fahrzeug nach Anspruch 4,
**dadurch gekennzeichnet, dass** bei Auftreten einer Biegebeanspruchung das zusätzliche Koppelelement (3) deaktiviert und die beiden benachbarten Koppelelemente (2) im Bereich der Schwingungsknoten der Biegeeigenformen aktiviert werden.

7. Fahrzeug nach einem der vorangegangenen Ansprüche,
**dadurch gekennzeichnet, dass** Mittel zur Steuerung oder Regelung der Koppelelemente (2, 3) vorgesehen sind, durch die die Koppelelemente (2, 3) je nach Fahrzeugzustand bzw. Beladung bzw. aktuellem Schwingungszustand gezielt angesteuert oder geregelt werden.

8. Fahrzeug nach einem der vorangegangenen Ansprüche,
**dadurch gekennzeichnet, daß** der Rahmen (4) zumindest teilweise aus Leichtmetall besteht.

9. Fahrzeug nach einem der vorangegangenen Ansprüche,
**dadurch gekennzeichnet, daß** der Rahmen (4) zur Aufnahme kinetischer Energie bei einer Kollision des Fahrzeugs ausgebildet ist.

10. Fahrzeug nach einem der vorangegangenen Ansprüche,
**dadurch gekennzeichnet, daß** der Fahrzeugaufbau (1) zumindest teilweise aus einem Faserverbundwerkstoff besteht.

11. Fahrzeug nach einem der vorangegangenen Ansprüche,
**dadurch gekennzeichnet, daß** der Rahmen (4) zwei seitliche Längsträger (11) sowie einen Mittelträger (12) und wenigstens zwei Querträger (13) aufweist.

12. Fahrzeug mit einem Rahmen nach Anspruch 1
**dadurch gekennzeichnet, daß** das Antriebraggregat als Brennkraftmaschine (5) ausgebildet ist, und so angeordnet ist, daß die Hauptwirkrichtung (10) der freien Massenkräfte der Brennkraftmaschine (5) etwa in Längsrichtung des Rahmens (4) verläuft.

13. Fahrzeug nach Anspruch 12,
**dadurch gekennzeichnet, daß** die Brennkraftmaschine (5) im Heck des Fahrzeugs angeordnet ist.

14. Fahrzeug nach Anspruch 12 und/oder 13,
**dadurch gekennzeichnet, daß** die Drehmomentabstützung der Brennkraftmaschine (5) im Bereich der Koppelelemente (2, 3) erfolgt.

## Claims

1. A vehicle comprising a frame receiving the drive unit and/or the vehicle running gear and also comprising a vehicle body for receiving the occupants and transported material, wherein the frame and body are connected by coupling elements, **characterised in that** the coupling elements (2) are disposed at least in the neighbourhood of a front (in the direction of travel FR) of the vehicle and a rear vibration node (K_{Bn}) of the natural form or forms of bending of the frame (4).

2. A vehicle according to claim 1, **characterised in that** at least one additional coupling element (3) is disposed in the neighbourhood of vibration nodes (K_{Tn}) of the natural form or forms of torsion of the frame (4).

3. A vehicle according to claim 2, **characterised in that** the additional coupling element (3) is disposed **in that** portion of the frame (4) in which the greatest amplitudes occur in the event of torsional stresses on the neighbouring coupling elements (2) in the region of the vibration nodes of the natural forms of bending.

4. A vehicle according to claim 2 and/or 3, **characterised in that** means are provided for open or closed-loop control of the coupling elements (2, 3) whereby one or the other group of coupling elements (2, 3) or individual coupling elements (2, 3) are (in)activated, depending on the instantaneous dominant form of vibration (bending or torsion).

5. A vehicle according to claim 4, **characterised in that** in the event of torsional stress a "three-point bearing" is obtained by activating the additional coupling elements (3) and inactivating the two neighbouring coupling elements (2) in the region of the vibration nodes of the natural forms of bending.

6. A vehicle according to claim 4, **characterised in that** in the event of bending stress the additional coupling element (3) is inactivated and the two neighbouring coupling elements (2) are activated in the region of the vibration nodes of the natural forms of bending.

7. A vehicle according to any of the preceding claims, **characterised in that** means are provided for open or closed-loop control of the coupling elements (2, 3) whereby the coupling elements (2, 3) are controlled in open or closed loop according to plan, depending on the state or load on the vehicle and on the actual state of vibration.

8. A vehicle according to any of the preceding claims, **characterised in that** the frame (4) is at least partly made of light metal.

9. A vehicle according to any of the preceding claims, **characterised in that** the frame (4) is adapted to absorb kinetic energy if the vehicle is in a collision.

10. A vehicle according to any of the preceding claims, **characterised in that** the body (1) comprises at least partly of a composite fibre material.

11. A vehicle according to any of the preceding claims, **characterised in that** the frame (4) has two lateral members (11), a central member (12) and at least two transverse members (13).

12. A vehicle comprising a frame according to claim 1, **characterised in that** the drive unit is in the form of an internal combustion engine (5) and is disposed so that the main direction of action (10) of the free inertial forces of the engine (5) extends approximately in the longitudinal direction of the frame (4).

13. A vehicle according to claim 12, **characterised in that** the engine (5) is disposed at the rear of the vehicle.

14. A vehicle according to claim 12 and/or 13, **characterised in that** the torque on the engine (5) is absorbed in the neighbourhood of the coupling elements (2, 3).

## Revendications

1. Véhicule automobile comportant un châssis sur lequel est monté le groupe propulseur et/ou le train roulant du véhicule ainsi qu'une carrosserie pour accueillir les occupants du véhicule et les objets transportés, le châssis et la carrosserie étant reliés entre eux par des éléments d'accouplement,
**caractérisé en ce que**
les éléments d'accouplement (2) sont disposés par rapport au sens d'avancement du véhicule (FR), au moins dans la zone d'un noeud de vibration (K_{Bn}) avant et arrière de la(des) courbe(s) de flexion propre du châssis (4).

2. Véhicule automobile selon la revendication 1,
**caractérisé en ce qu'**
au moins un élément d'accouplement supplémentaire (3) est monté dans la zone des noeuds de vibration (K_{Tn}) de la(des) courbe(s) de torsion propre du châssis (4).

3. Véhicule automobile selon la revendication 2,
**caractérisé en ce qu'**
un élément d'accouplement supplémentaire (3) est monté dans la section du châssis (4) où, quand s'exerce une contrainte de torsion sur les éléments d'accouplement voisins (2), les amplitudes les plus grandes apparaissent dans la zone des noeuds de vibration des courbes de flexion propre.

4. Véhicule automobile selon l'une quelconque des revendications 2 et/ou 3,
**caractérisé en ce qu'**
il est prévu des moyens de commande ou de régulation des éléments d'accouplement (2, 3) par lesquels, selon la forme de vibration (flexion ou torsion) qui est dominante à cet instant, l'un ou l'autre groupe d'éléments d'accouplement (2, 3) ou les éléments individuels (2, 3) sont désactivés.

5. Véhicule automobile selon la revendication 4,
**caractérisé en ce que**
quand apparaît une contrainte de torsion, on obtient un « support en trois points » en activant l'élément d'accouplement supplémentaire (3) tout en désactivant les deux éléments d'accouplement voisins (2) dans la zone des noeuds de vibration des courbes de flexion propre.

6. Véhicule automobile selon la revendication 4,
**caractérisé en ce que**
quand apparaît une contrainte de flexion, l'élément d'accouplement supplémentaire (3) est désactivé et les deux éléments d'accouplement voisins (2) sont activés dans la zone des noeuds de vibration des courbes de flexion propre.

7. Véhicule automobile selon l'une quelconque des revendications précédentes,
**caractérisé en ce qu'**
il est prévu, pour commander ou réguler les éléments d'accouplement (2, 3), des moyens par lesquels ces éléments (2, 3) sont commandés ou régulés chaque fois en fonction de l'état du véhicule, de sa charge et de son état vibratoire.

8. Véhicule automobile selon l'une quelconque des revendications précédentes,
**caractérisé en ce que**
le châssis (4) est au moins partiellement en métal léger.

9. Véhicule automobile selon l'une quelconque des revendications précédentes,
**caractérisé en ce que**
le châssis (4) est constitué pour absorber l'énergie cinétique en cas de collision du véhicule.

10. Véhicule automobile selon l'une quelconque des revendications précédentes,
**caractérisé en ce que**
la carrosserie (1) du véhicule est, au moins en partie, constituée d'un composite à base de fibres.

11. Véhicule automobile selon l'une quelconque des revendications précédentes,
**caractérisé en ce que**
le châssis (4) comprend deux longerons (11) longitudinaux, un longeron central (12) et au moins deux traverses (13).

12. Véhicule automobile selon la revendication 1,
**caractérisé en ce que**
le groupe propulseur comprend un moteur à combustion interne (5) et est disposé de manière que la direction principale d'action (10) des forces massiques du moteur (5) est sensiblement la direction longitudinale du châssis (4).

13. Véhicule automobile selon la revendication 12,
**caractérisé en ce que**
le moteur (5) est monté à l'arrière du véhicule.

14. Véhicule automobile selon l'une quelconque des revendications 12 ou 13,
**caractérisé en ce que**
le couple du moteur (5) est en appui dans la zone des éléments d'accouplement (2, 3).
